# EUROPEAN PATENT SPECIFICATION

(11) **EP 4 556 322 B1**
(45) Date of publication and mention of the grant of the patent: **06.05.2026**
(21) Application number: 23209899.6
(22) Date of filing: 14.11.2023
(51) Int. Cl.: B60S 1/38

(54) **WINDSHIELD WIPER ASSEMBLY STRUCTURE**
SCHEIBENWISCHERANORDNUNGSSTRUKTUR
STRUCTURE D'UN ENSEMBLE ESSUIE-GLACE

(43) Date of publication of application: 21.05.2025
(73) Proprietor: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patent Partnerschaft mbB

(56) References cited:
- EP-B1- 2 259 954
- GB-A- 2 336 293
- US-A- 3 153 254
- US-A- 3 626 544
- US-A- 3 940 823
- US-B1- 6 253 412

## Description

### BACKGROUND OF THE DISCLOSURE

### Technical Field

The technical field relates to a windshield wiper, and more particularly relates to a windshield wiper assembly structure.

### Description of Related Art

A windshield wiper mainly includes a snap-clip adapter, a wiper frame, metal elastic sheets and a rubber blade, etc. The snap-clip adapter is installed on the wiper frame to be combined with a wiper arm. Additionally, the metal elastic sheets and the rubber blade are combined on the wiper frame, and the rubber blade is clamped and fixed by the metal elastic sheets and the wiper frame. Accordingly, the wiper arm is combines with the snap-clip adapter and drives the rubber blade to clean the windshield.

However, the clamping and fixing method of the aforementioned rubber blade is not firm. Thus, the rubber blade is easily to be disengaged or be pulled out from the side. Besides, the wiper blade may be deteriorated, deformed, or displaced after being used for a period of time, and that may cause the rubber blade to be not able to attach the windshield firmly, thereby affecting the cleaning effectiveness of the windshield wiper.

US 3 153 254 A discloses a windshield wiper assembly structure, but does not disclose that he pair of clipping plates respectively comprises a protruding thorn protruding horizontally and facing each other, that the pair of clipping plates is inserted in the first slots on the two sides of the central column from one end of the wiper blade to abut against the pair of the elastic sheets, and that the protruding thorn of each clipping plate is inserted in the central column.

### SUMMARY OF THE DISCLOSURE

One object of this disclosure is to provide a windshield wiper assembly structure to prevent disengagement or displacement of the wiper blade, thereby providing a firm and solid windshield wiper assembly structure.

This problem is solved by a windshield wiper assembly structure as claimed in claim 1. Further advantageous embodiments are the subject-matter of the dependent claims.

According to the disclosure there is provided a windshield wiper assembly structure comprising a wiper holder, a wiper blade, a pair of elastic sheets and a pair of clamping seats. The wiper holder includes a main frame and a pair of outer buckling brackets connected to the main frame. Each outer buckling bracket includes a through groove and an opening communicating to the through groove. The wiper blade extends along the main frame and includes a penetrating portion and a scraping portion connected to the penetrating portion. The penetrating portion is inserted in the through grooves of the pair of outer buckling brackets. The penetrating portion includes a central column, and two first slots are respectively defined on two sides of the central column. The scraping portion protrudes from the opening. The pair of elastic sheets extend along the wiper blade and are respectively inserted in the first slots on two sides of the central column. One side of each elastic sheet is attached to the central column, and another side of the elastic sheet abuts against the pair of outer buckling brackets. The pair of clamping seats are fixed on two ends of the wiper blade. Each clamping seat includes a pair of clipping plates connected with each other and is clamped by the pair of the outer buckling brackets.

According to the invention, the pair of clipping plates respectively comprises a protruding thorn protruding in a horizontal direction and facing each other, wherein the pair of clipping plates is inserted in the first slots on two sides of the central column from one end of the wiper blade to abut against the pair of the elastic sheets, and the protruding thorn of each clipping plate is inserted in the central column, wherein two snapping holes are respectively defined on two ends of each elastic sheet on a side away from the central column thereof, and each clipping plate comprises a blocking portion to be engaged in the snapping hole.

In one embodiment of this disclosure, the blocking portion includes a tab extending obliquely from a surface of each clipping plate toward the elastic sheet.

In one embodiment of this disclosure, a notch is defined on a side of each clipping plate, and each outer buckling bracket is fastened to the notch of each clipping plate.

In one embodiment of this disclosure, each clipping plate includes a hook located on an end thereof and adjacent to the notch.

In one embodiment of this disclosure, the clipping plate has elastic restoring force. The hook is elastically pressed by the outer buckling bracket, and the clipping plate is positioned on the notch through elastic restoring force when the hook passes through the outer buckling brackets.

In one embodiment of this disclosure, a recess is defined on one side of the protruding thorn of the clipping plate and adjacent to the protruding thorn of another clipping plate.

In one embodiment of this disclosure, the clamping seat further includes a baffle and a pair of side plates perpendicularly connected to the clipping plates. The baffle is connected to one end of the pair of clipping plates, and the pair of side plates are located on opposite two outer sides of the pair of clipping plates.

In one embodiment of this disclosure, each clamping seat further includes a pair of buckling plates arranged perpendicularly to the baffle, a buckling slot is defined on each of the side plates, one end of each buckling plate is connected to the baffle, and another end of each buckling plate is clamped in the buckling slot.

In one embodiment of this disclosure, each buckling plate is an L-shaped plate.

In one embodiment of this disclosure, the penetrating portion includes two second slots respectively defined on two sides of the central column, the second slot is located between the first slot and the scraping portion, and each buckling plate is located in the second slot.

According to an unclaimed aspect the present disclosure provides a windshield wiper assembly structure including a wiper holder, a wiper blade, a pair of elastic sheets and a pair of clamping seats. The wiper holder includes a main frame and a pair of outer buckling brackets connected to the main frame. Each outer buckling bracket includes a through groove and an opening connected to the through groove. The wiper blade includes a penetrating portion and a scraping portion connected to the penetrating portion. The penetrating portion is inserted in the through grooves of the pair of the outer buckling brackets. A pair of first slots are defined on the penetrating portion, and the scraping portion protrudes from the opening. The pair of elastic sheets are respectively inserted in the first slots. One side of each elastic sheet is attached to the wiper blade, and another side of the each elastic sheet abuts against the pair of outer buckling brackets. The pair of clamping seats are fixed on two ends of the wiper blade. Each clamping seat includes a pair of clipping plates clamped by the pair of the outer buckling brackets, a baffle and a pair of side plates connected to the clipping plates. A pair of buckling plates are extended perpendicularly to the baffle. According to the invention, the pair of clipping plates is inserted in the first slots from one end of the wiper blade to abut against the pair of the elastic sheets, wherein the baffle is connected to one end of the pair of clipping plates, and a buckling slot is defined on each side plate, and wherein one end of each buckling plate is connected to the baffle, and another end of each buckling plate is clamped in the buckling slot.

In one unclaimed embodiment of this further aspect, two snapping holes are respectively defined on two ends of each of the elastic sheets, and each clipping plate includes a blocking portion to be engaged in the snapping hole.

In one unclaimed embodiment of this further aspect, the blocking portion includes a tab extending obliquely from a surface of the clipping plate toward the elastic sheet.

In one unclaimed embodiment of this further aspect, a notch is disposed on a side of each clipping plate. and each outer buckling bracket is fastened to the notch of each clipping plate.

In one unclaimed embodiment of this further aspect, the clipping plate includes a hook located on an end thereof, and the hook is disposed adjacent to the notch.

In one unclaimed embodiment of this further aspect, the clipping plate has elastic restoring force. The hook is elastically pressed by the outer buckling bracket, and the clipping plate is positioned on the notch through elastic restoring force when the hook passes through the outer buckling bracket.

In one unclaimed embodiment of this further aspect, the pair of clipping plates respectively comprises a protruding thorn protruding in a horizontal direction and facing each other, and a recess is defined on one side of the protruding thorn of the clipping plate and adjacent to the protruding thorn of another clipping plate.

In one unclaimed embodiment of this further aspect, each buckling plate is an L-shaped plate.

In comparison with the related art, the clamping seat of the windshield wiper assembly structure of this disclosure is inserted in the first slot located on two sides of the central column from one end of the wiper blade to make the protruding thorn of the clipping plate pass through the central column, and the outer buckling brackets may be fastened to the notch of each clipping plate. Furthermore, the blocking portion of the clipping plate may be engaged in the snapping hole of the elastic sheet. As a result, the wiper blade is fastened and positioned through the clamping seats to prevent disengagement or displacement, and the windshield wiper assembly structure is firm and solid to have a longer service life.

### BRIEF DESCRIPTION OF THE DRAWINGS

The features of the disclosure believed to be novel are set forth with particularity in the appended claims. The disclosure itself, however, may be best understood by reference to the following detailed description of the disclosure, which describes a number of exemplary embodiments of the disclosure, taken in conjunction with the accompanying drawings, in which:
FIG. 1 is a perspective schematic view of the windshield wiper assembly structure in this disclosure.
FIG. 2 and FIG. 3 are partially enlarged schematic views of the windshield wiper assembly structure from two sides thereof in this disclosure.
FIG. 4 is a perspective exploded schematic view of the windshield wiper assembly structure in this disclosure.
FIG. 5 and FIG. 6 are perspective schematic views of the clamping seat from two sides thereof in this disclosure.
FIG. 7 and FIG. 8 are cross sectional views of the windshield wiper assembly structure from two sides thereof in this disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

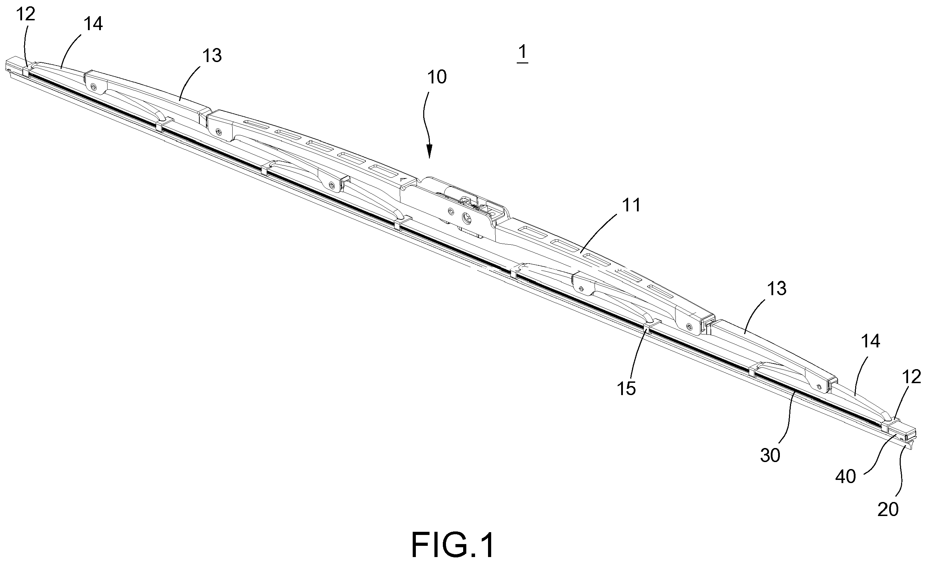

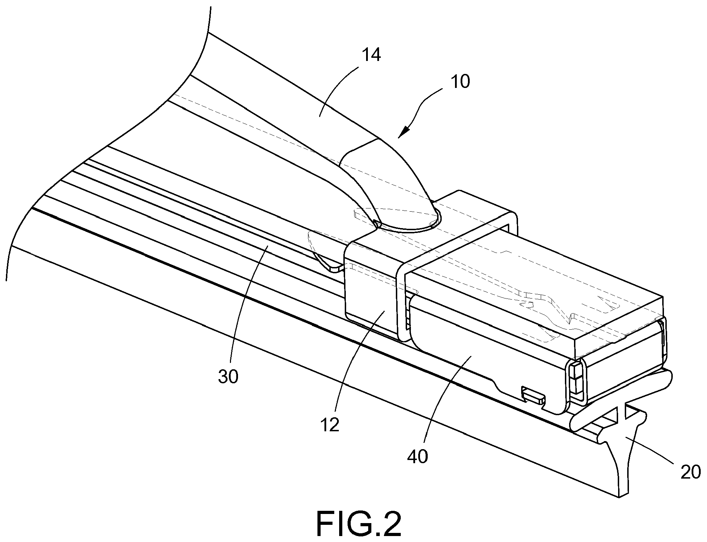

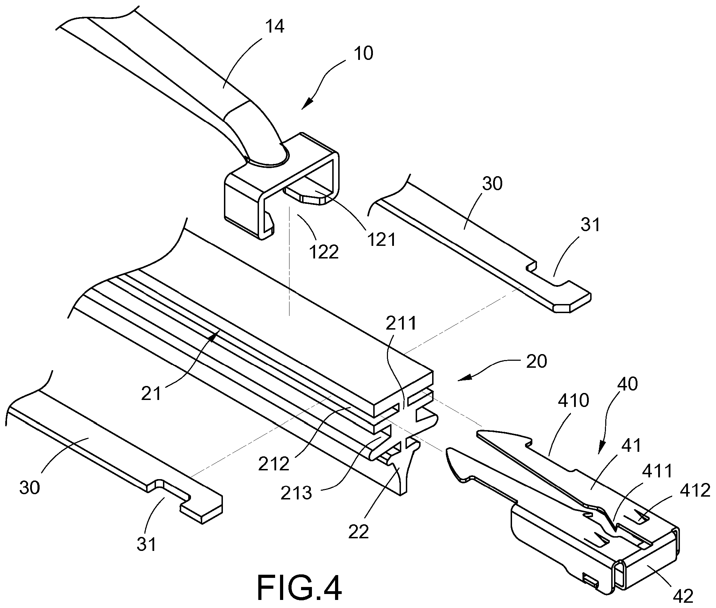

Please refer to FIG.1 to FIG. 4, which are a perspective schematic view of the windshield wiper assembly structure in this disclosure, two partially enlarged schematic views of the windshield wiper assembly structure from two sides thereof in this disclosure, and a perspective exploded schematic view of the windshield wiper assembly structure in this disclosure. This disclosure is a windshield wiper assembly structure 1 including a wiper holder 10, a wiper blade 20, a pair of elastic sheets 30 and a pair of clamping seats 40. The wiper blade 20 and the pair of elastic sheets 30 are combined on the wiper holder 10. The pair of clamping seats 40 are inserted on two ends of the wiper blade 20 and clamp the wiper blade 20 and the pair of elastic sheets 30 to prevent disengagement or displacement of the wiper blade 20, thereby providing a firm and solid windshield wiper assembly structure 1.

The wiper holder 10 includes a main frame 11 and a pair of outer buckling brackets 12 connected to the main frame 11. Each outer buckling bracket 12 includes a through groove 121 and an opening 122 communicating to the through groove 121.

In one embodiment of this disclosure, the wiper holder 10 further includes a pair of auxiliary frames 13 pivotally connected to two ends of the main frame 11. Additionally, the pair of auxiliary frames 13 are further pivotally connected with a plurality of buckling arms 14. Each buckling arm 14 is combined with a buckling bracket 15 on the end thereof. In more detail, a plurality of buckling brackets 15 are disposed spacedly on the bottom side of the main frame 11 and the pair of auxiliary frames 13, and the outermost two buckling brackets 15 are defined as outer buckling brackets 12.

The wiper blade 20 extends along the main frame 11 to outer sides of two outer buckling brackets 12. The wiper blade 20 includes a penetrating portion 21 and a scraping portion 22 connected to the penetrating portion 21. The penetrating portion 21 is inserted in the through grooves 121 of the pair of outer buckling brackets 12. The penetrating portion 21 includes a central column 211, and a first slot 212 is respectively disposed on both sides of the central column 211. The scraping portion 22 protrudes from the opening 122.

The elastic sheet 30 is a metal sheet. The pair of elastic sheets 30 extend along the wiper blade 20 and are respectively inserted in the first slots 212 on two sides of the central column 211. Additionally, a snapping hole 31 is respectively disposed on two ends of each elastic sheet 30.

Moreover, the clamping seat 40 is a metal piece. The pair of clamping seats 40 are fixed on two ends of the wiper blade 20. More detailed of the structure of the clamp seat 40 is as follows.

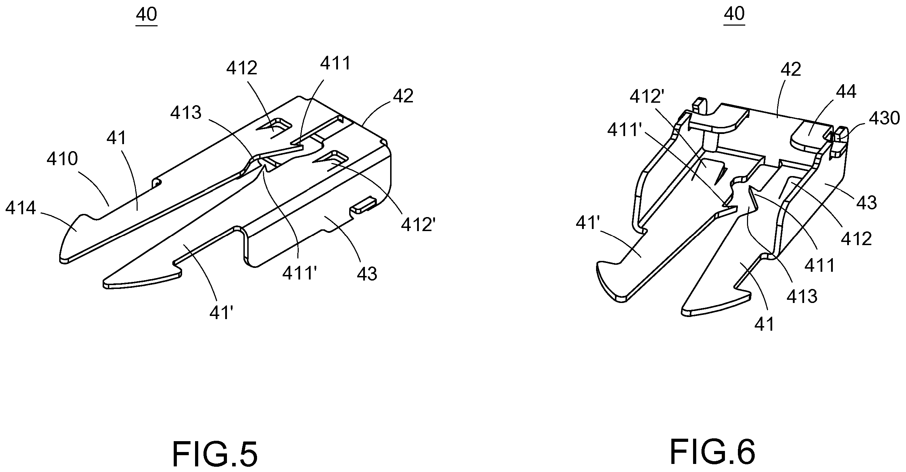

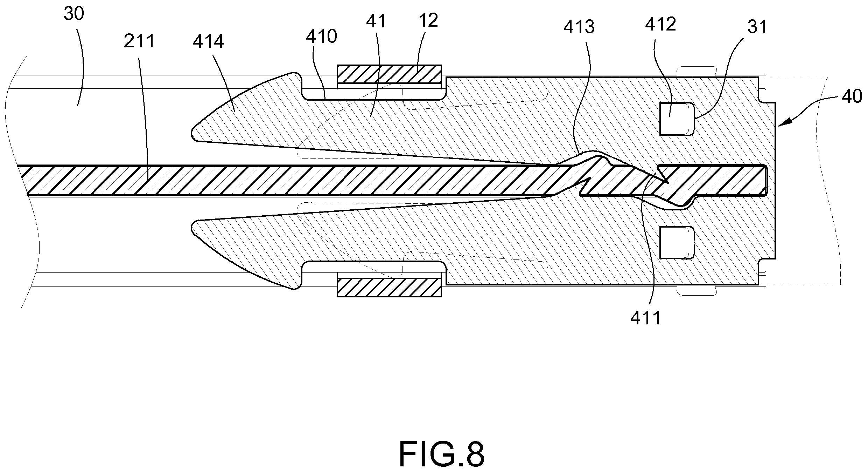

Please further refer to FIG. 5 and FIG. 6, which are perspective schematic views of the clamping seat from two sides thereof in this disclosure. Each clamping seat 40 includes a pair of clipping plates 41, 41' connected with each other, and the pair of clipping plates 41, 41' include the protruding thorns 411, 411' protruding in a horizontal direction and facing each other (on opposite sides thereof). Additionally, a notch 410 is defined on a side of each clipping plate 41, 41'. Each clipping plate 41, 41' includes a blocking portion 412 to be engaged in the snapping hole 31 of each elastic sheet 30 (further refer to FIG. 8). The blocking portion 412 includes a tab extending obliquely from a surface of the clipping plate 41, 41' toward the elastic sheet 30.

Accordingly, the pair of clipping plates 41, 41' are inserted in the first slots 212 located on two sides of the central column 211 from one end of the wiper blade 20 to abut against the pair of the elastic sheets 30, and the protruding thorn 411, 411' of each clipping plate 41, 41' passes through the central column 211. Furthermore, each outer buckling bracket 12 is fastened to the notch 410 of each clipping plate 41 (further refer to FIG. 8).

Specifically, the clamping seat 40 includes a pair of clipping plates 41, 41' connected with each other, a baffle 42 perpendicularly connected to the clipping plates 41, 41' and a pair of side plates 43. The baffle 42 is connected to one end of the pair of clipping plates 41, 41'. The pair of side plates 43 are located on opposite two outer sides of the pair of clipping plates 41, 41'. Additionally, a protruding thorn 411 and a blocking portion 412 are disposed on one of the clipping plates 41, 41' of the clamp base 40, and a protruding thorn 411' and a blocking portion 412' are disposed on another clipping plate 41' of the clamp seat 40.

Here, the structure of the clipping plate 41 of the clamping seat 40 is described as follows. A recess 413 is defined on one side of the protruding thorn 411 of the clipping plate 41 and adjacent to the protruding thorn 411' of another clipping plate 41'. Additionally, the clipping plate 41 includes a hook 414 located on an end thereof and is adjacent to the notch 410. The disposition of the hook 414 may facilitate the protruding thorn 41 passing through the wiper blade 20, thereby increasing the convenience of assembly.

Moreover, the clamping seat 40 further includes a pair of buckling plates 44 arranged perpendicularly to the baffle 42. A buckling slot 430 is defined on the side plates 43. One end of the buckling plate 44 is connected to the baffle 42, and another end of the buckling plate 44 is clamped in the buckling slot 430. In this embodiment, each buckling plate 44 is an L-shaped plate

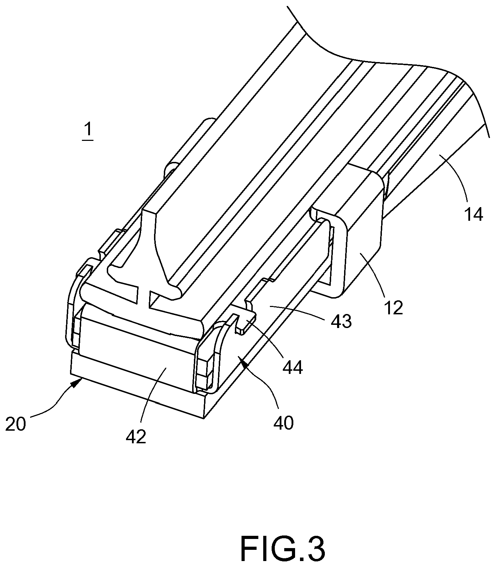

It should be noted that the disposition of the baffle 42 may prevent over passing through the rubber strip 20 during the installation of the clamp base 40. Additionally, the baffle 42 blocks one side of the rubber strip 20 and the pair of elastic pieces 30 to prevent the rubber strip 20 and the pair of elastic pieces 30 from being displaced and out of position (see also FIG.3). Moreover, the disposition of the buckling plate 44 is provided to position the side plate 43 to prevent the side plate 43 from being displaced when impacted by external force, thereby preventing the rubber strip 20 from disengaging.

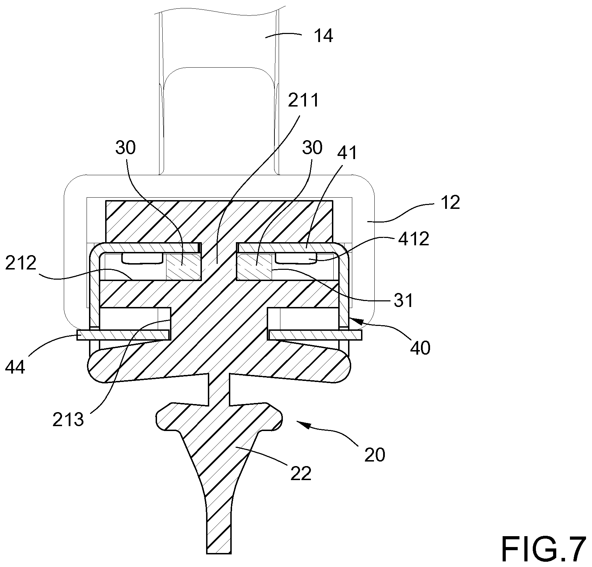

Please further refer to FIG. 7 and FIG. 8, which are cross sectional views of the windshield wiper assembly structure from two sides thereof in this disclosure. In the windshield wiper assembly structure 1 of this disclosure, the wiper blade 20 is positioned by the pair of clamping seats 40 combined on two ends thereof. As a result, the wiper blade 20 may be combined on the wiper holder 10 firmly.

Further, the wiper blade 20 passes through the buckling brackets 15 of each buckling arm 14 and extends to the outer of the two outer buckling brackets 12 (further refer to FIG. 1). The elastic sheet 30 is inserted in the first slot 212 of the wiper blade 20. Additionally, the clamp seat 40 is inserted in the first slot 212 from the end of the wiper blade 20 through the clipping plate 41 and abuts against the pair of the elastic sheets 30. One side of the elastic sheet 30 is attached to the central column 211 of the wiper blade 20, and another side of the elastic sheet 30 abuts against the outer buckling brackets 12.

Moreover, the penetrating portion 21 of the wiper blade 20 further includes a second slot 213 respectively located on two sides of the central column 211. The second slot 213 is located between the first slot 211 and the scraping portion 22. After the clipping plate 41 of the clamping seat 40 passes through the first slot 212 of the wiper blade 20, each buckling plate 44 is located in the second slot 213 (see FIG. 7).

It is worth of noticing that when the clamping seat 40 is inserted in the first slot 212, the protruding thorn 411 of the clipping plate 41 pass through the central column 211. Then, the central column 211 is pushed by the protruding thorn 411 and a part of the material moves into the recess 413 located on the rear side of the protruding thorn 411 (see FIG. 8). The disposition of the recess 413 may facilitate the clamping seat 40 inserting into the first slot 212 when installing the clamp base 40.

It is worth noticing that the clipping plate 41 has elastic restoring force. The hook 414 is elastically pressed by the outer buckling bracket 12, and the clipping plate 41 is positioned on the notch 410 through elastic restoring force when the hook 414 passes through the outer buckling bracket 12. As a result, the outer buckling bracket 12 clamps the clipping plate 41 to ensure that the wiper blade 20 may not be disengaged from positioning.

## Claims

1. A windshield wiper assembly structure (1), comprising:
a wiper holder (10), comprising a main frame (11) and a pair of outer buckling brackets (12) connected to the main frame (11), each outer buckling bracket (12) comprising a through groove (121) and an opening (122) communicating to the through groove (121);
a wiper blade (20), extending along the main frame (11), comprising a penetrating portion (21) and a scraping portion (22) connected to the penetrating portion (21), wherein the penetrating portion (21) is inserted in multiple through grooves (121) of the pair of outer buckling brackets (12), the penetrating portion (21) comprises a central column (211) and two first slots (212) defined on two sides of the central column (211), and the scraping portion (22) protrudes from the opening (122);
a pair of elastic sheets (30), extending along the wiper blade (20) and respectively inserted in the first slots (212) on the two sides of the central column (211), wherein one side of each elastic sheet (30) is attached to the central column (211) and another side of the each elastic sheet (30) abuts against the pair of outer buckling brackets (12); and
a pair of clamping seats (40) fixed on two ends of the wiper blade (20), each clamping seat (40) comprising a pair of clipping plates (41, 41') connected with each other and clamped by the pair of outer buckling brackets (12);
**characterized in that** the pair of clipping plates (41, 41') respectively comprises a protruding thorn (411, 411') protruding horizontally and facing each other, wherein
the pair of clipping plates (41, 41') is inserted in the first slots (212) on the two sides of the central column (211) from one end of the wiper blade (20) to abut against the pair of the elastic sheets (30) and the protruding thorn (411, 411') of each clipping plate (41, 41') is inserted in the central column (211), and wherein
two snapping holes (31) are respectively defined on two ends of the each elastic sheet on a side away from the central column (211), each clipping plate (41, 41') comprising a blocking portion (412) engaged in each snapping hole (31).

2. The windshield wiper assembly structure (1) according to claim 1, wherein the blocking portion (412) comprises a tab extending obliquely from a surface of each clipping plate (41, 41') toward each elastic sheet (30).

3. The windshield wiper assembly structure (1) according to claim 1 or 2, wherein a notch (410) is defined on a side of each clipping plate (41), and each outer buckling bracket (12) is fastened to the notch (410) of each clipping plate (41).

4. The windshield wiper assembly structure (1) according to claim 3, wherein each clipping plate (41) comprises a hook (414) located on an end thereof and adjacent to the notch (410).

5. The windshield wiper assembly structure (1) according to any of the preceding claims, wherein a recess (413) is defined on one side of one of multiple protruding thorns (411,411') of one of the clipping plates (41,41') and adjacent to another one of the protruding thorns (411,411') of another one of the clipping plates (41,41').

6. The windshield wiper assembly structure (1) according to any of the preceding claims, wherein each clamping seat (40) further comprises a baffle (42) and a pair of side plates (43) all perpendicularly connected to the pair of clipping plates (41, 41'), the baffle (42) is connected to one end of the pair of clipping plates (41, 41'), and the pair of side plates (43) are located on two outer sides of the pair of clipping plates (41, 41') opposite to each other.

7. The windshield wiper assembly structure (1) according to claim 6, wherein the each clamping seat (40) further comprises a pair of buckling plates (44) arranged perpendicularly to the baffle (42); a buckling slot (430) is defined on each side plate (43); and one end of each buckling plate (44) is connected to the baffle (42), and another end of the each buckling plate (44) is clamped in the buckling slot (430).

8. The windshield wiper assembly structure (1) according to claim 7, wherein the penetrating portion (21) comprises two second slots (213) respectively defined on two sides of the central column (211), the second slot (213) is located between the first slot (212) and the scraping portion (22), and each buckling plate (44) is located in the second slot (213).

## Patentansprüche

1. Aufbau einer Scheibenwischereinheit (1), umfassend:
einen Wischerhalter (10), umfassend einen Hauptrahmen (11) und ein Paar äußere Bügelhalterungen (12), die mit dem Hauptrahmen (11) verbunden sind, wobei jede äußere Bügelhalterung (12) eine Durchführungsnut (121) und eine mit der Durchführungsnut (121) in Verbindung stehende Öffnung (122) umfasst;
ein Wischerblatt (20), das sich entlang des Hauptrahmens (11) erstreckt und einen Eingriffsabschnitt (21) und einen mit dem Eingriffsabschnitt (21) verbundenen Wischabschnitt (22) umfasst, wobei der Eingriffsabschnitt (21) in mehrere Durchführungsnuten (121) des Paares äußerer Bügelhalterungen (12) eingeführt ist, der Eingriffsabschnitt (21) eine Mittelsäule (211) und zwei erste Aussparungen (212) aufweist, die auf den beiden Seiten der Mittelsäule (211) ausgebildet sind, und der Wischabschnitt (22) aus der Öffnung (122) vorsteht;
ein Paar elastischer Streifen (30), die sich entlang des Wischerblatts (20) erstrecken und jeweils in die ersten Aussparungen (212) auf den beiden Seiten der Mittelsäule (211) eingeführt sind, wobei eine Seite jedes elastischen Streifens (30) an der Mittelsäule (211) befestigt ist und eine andere Seite jedes elastischen Streifens (30) an dem Paar äußerer Bügelhalterungen (12) anliegt; und
ein Paar Klemm- bzw. Spannaufnahmen (40), die an beiden Enden des Wischerblatts (20) befestigt sind, wobei jede Klemm- bzw. Spannaufnahme (40) ein Paar miteinander verbundener Klemm- bzw. Spannplatten (41, 41') umfasst, die durch das Paar äußerer Bügelhalterungen (12) geklemmt werden;
**dadurch gekennzeichnet, dass** das Paar von Klemm- bzw. Spannplatten (41, 41') jeweils einen hervorstehenden Stift (411, 411') aufweist, die horizontal vorstehen und einander zugewandt sind, wobei
das Paar von Klemm- bzw. Spannplatten (41, 41') in die ersten Aussparungen (212) an den beiden Seiten der Mittelsäule (211) auf beiden Seiten der Mittelsäule (211) eingesetzt sind, um an dem Paar elastischer Streifen (30) anzuliegen, und der vorstehende Stift (411, 411') jeder Klemm- bzw. Spannplatte (41, 41') in die Mittelsäule (211) eingesetzt ist, und wobei
zwei Einrastaussparungen (31) jeweils an den beiden Enden von jedem elastischen Streifen definiert sind, auf einer Seite, die von der Mittelsäule (211) abgewandt ist, wobei jede Klemm- bzw. Spannplatte (41, 41') einen Blockierabschnitt (412) umfasst, der in jede Einrastaussparung (31) eingreift.

2. Aufbau einer Scheibenwischereinheit (1) nach Anspruch 1, wobei der Blockierabschnitt (412) eine Lasche umfasst, die sich schräg von einer Oberfläche jeder Klemm- bzw. Spannplatte (41, 41') in Richtung jedem elastischen Streifen (30) erstreckt.

3. Aufbau einer Scheibenwischereinheit (1) nach Anspruch 1 oder 2, wobei eine Kerbe (410) an einer Seite jeder Klemm- bzw. Spannplatte (41) definiert ist und jede äußere Bügelhalterung (12) an der Kerbe (410) jeder Klemm- bzw. Spannplatte (41) befestigt ist.

4. Aufbau einer Scheibenwischereinheit (1) nach Anspruch 3, wobei jede Klemm- bzw. Spannplatte (41) einen Haken (414) umfasst, der sich an einem Ende davon und benachbart zur Kerbe (410) befindet.

5. Aufbau einer Scheibenwischereinheit (1) nach einem der vorstehenden Ansprüche, wobei eine Aussparung (413) auf einer Seite eines der mehreren vorstehenden Stifte (411, 411') einer der Klemm- bzw. Spannplatten (41, 41') und benachbart zu einem anderen der vorstehenden Stifte (411, 411') einer anderen der Klemm- bzw. Spannplatten (41, 41') definiert ist.

6. Aufbau einer Scheibenwischereinheit (1) nach einem der vorstehenden Ansprüche, wobei jede Klemm- bzw. Spannaufnahme (40) ferner eine Abdeckplatte (42) und ein Paar Seitenplatten (43) umfasst, die alle senkrecht mit dem Paar Klemm- bzw. Spannplatten (41, 41') verbunden sind, wobei die Abdeckplatte (42) mit einem Ende des Paares von Klemm- bzw. Spannplatten (41, 41') verbunden ist und das Paar von Seitenplatten (43) an zwei einander gegenüberliegenden Außenseiten des Paares von Klemm- bzw. Spannplatten (41, 41') angeordnet ist.

7. Aufbau einer Scheibenwischereinheit (1) nach Anspruch 6, wobei jede Klemm- bzw. Spannaufnahme (40) ferner ein Paar seitliche Platten (44) aufweist, die senkrecht zur Abdeckplatte (42) angeordnet sind; ein Seitlicher Steg (430) an jeder Seitenplatte (43) definiert ist; und ein Ende jeder seitliche Platte (44) mit der Abdeckplatte (42) verbunden ist und ein anderes Ende jeder seitlichen Platte (44) in dem seitlichen Steg (430) geklemmt ist.

8. Aufbau einer Scheibenwischereinheit (1) nach Anspruch 7, wobei der Eingriffsabschnitt (21) zwei zweite Aussparungen (213) umfasst, die jeweils an zwei Seiten der Mittelsäule (211) definiert sind, die zweite Aussparung (213) zwischen der ersten Aussparung (212) und dem Wischabschnitt (22) angeordnet ist und jede seitliche Platte (44) in der zweiten Aussparung (213) angeordnet ist.

## Revendications

1. Une structure d'ensemble d'essuie-glace (1), comprenant :
un support d'essuie-glace (10), comprenant un châssis principal (11) et une paire de supports de flambage extérieurs (12) reliés au châssis principal (11), chaque support de flambage extérieur (12) comprenant une rainure traversante (121) et une ouverture (122) communiquant avec la rainure traversante (121) ;
une lame d'essuie-glace (20), s'étendant le long du cadre principal (11), comprenant une partie pénétrante (21) et une partie racleuse (22) reliée à la partie pénétrante (21), dans laquelle la partie pénétrante (21) est insérée dans plusieurs rainures traversantes (121) de la paire de supports de flambage extérieurs (12), la partie pénétrante (21) comprend une colonne centrale (211) et deux premières fentes (212) définies sur deux côtés de la colonne centrale (211), et la partie racleuse (22) fait saillie à partir de l'ouverture (122) ;
une paire de feuilles élastiques (30), s'étendant le long du balai d'essuie-glace (20) et respectivement insérées dans les premières fentes (212) sur les deux côtés de la colonne centrale (211), dans laquelle un côté de chaque feuille élastique (30) est fixé à la colonne centrale (211) et un autre côté de chaque feuille élastique (30) vient en butée contre la paire de supports de déformation extérieurs (12) ; et
une paire de sièges de serrage (40) fixés aux deux extrémités de la lame d'essuie-glace (20), chaque siège de serrage (40) comprenant une paire de plaques de fixation (41, 41') reliées entre elles et serrées par la paire de supports de déformation extérieurs (12) ;
**caractérisé en ce que** la paire de plaques de fixation (41, 41') comprend respectivement une épine saillante (411, 411') saillant horizontalement et se faisant face, dans lequel
la paire de plaques de fixation (41, 41') est insérée dans les premières fentes (212) sur les deux côtés de la colonne centrale (211) à partir d'une extrémité du balai d'essuie-glace (20) pour venir en butée contre la paire de feuilles élastiques (30) et l'épine saillante (411, 411') de chaque plaque de fixation (41, 41') est insérée dans la colonne centrale (211), et dans laquelle
deux trous d'encliquetage (31) sont respectivement définis sur les deux extrémités de chaque feuille élastique sur un côté éloigné de la colonne centrale (211), chaque plaque de fixation (41, 41') comprenant une partie de blocage (412) engagée dans chaque trou d'encliquetage (31).

2. La structure d'ensemble d'essuie-glace (1) selon la revendication 1, dans laquelle la partie de blocage (412) comprend une languette s'étendant obliquement depuis une surface de chaque plaque de fixation (41, 41') vers chaque feuille élastique (30).

3. La structure d'ensemble d'essuie-glace (1) selon la revendication 1 ou 2, dans laquelle une encoche (410) est définie sur un côté de chaque plaque de fixation (41), et chaque support de déformation extérieur (12) est fixé à l'encoche (410) de chaque plaque de fixation (41).

4. La structure d'ensemble d'essuie-glace (1) selon la revendication 3, dans laquelle chaque plaque de fixation (41) comprend un crochet (414) situé à une extrémité de celle-ci et adjacent à l'encoche (410).

5. La structure d'ensemble d'essuie-glace (1) selon l'une quelconque des revendications précédentes, dans laquelle un évidement (413) est défini sur un côté de l'une des multiples épines saillantes (411, 411') de l'une des plaques de fixation (41, 41') et adjacent à une autre des épines saillantes (411, 411') d'une autre des plaques de fixation (41, 41').

6. La structure d'ensemble d'essuie-glace (1) selon l'une quelconque des revendications précédentes, dans laquelle chaque siège de serrage (40) comprend en outre un déflecteur (42) et une paire de plaques latérales (43) tous reliés perpendiculairement à la paire de plaques de fixation (41, 41'), le déflecteur (42) est relié à une extrémité de la paire de plaques de fixation (41, 41'), et la paire de plaques latérales (43) est située sur les deux côtés extérieurs de la paire de plaques de fixation (41, 41') opposés l'un à l'autre.

7. La structure d'ensemble d'essuie-glace (1) selon la revendication 6, dans laquelle chaque siège de serrage (40) comprend en outre une paire de plaques de déformation (44) disposées perpendiculairement à la cloison (42) ; une fente de déformation (430) est définie sur chaque plaque latérale (43) ; et une extrémité de chaque plaque de déformation (44) est reliée au déflecteur (42), et une autre extrémité de chaque plaque de déformation (44) est serrée dans la fente de déformation (430).

8. La structure d'ensemble d'essuie-glace (1) selon la revendication 7, dans laquelle la partie pénétrante (21) comprend deux secondes fentes (213) définies respectivement sur deux côtés de la colonne centrale (211), la deuxième fente (213) est située entre la première fente (212) et la partie de raclage (22), et chaque plaque de déformation (44) est située dans la deuxième fente (213).
